(19) Europäisches Patentamt
European Patent Office
Office européen des brevets

(11) **EP 4 329 005 A1**

(12) **EUROPEAN PATENT APPLICATION**
published in accordance with Art. 153(4) EPC

(43) Date of publication:
**28.02.2024 Bulletin 2024/09**

(21) Application number: **22916719.2**

(22) Date of filing: **27.12.2022**

(51) International Patent Classification (IPC):
$H01M\ 4/36$ [(2006.01)]    $H01M\ 4/525$ [(2010.01)]
$H01M\ 4/505$ [(2010.01)]    $C01G\ 53/00$ [(2006.01)]
$H01M\ 4/131$ [(2010.01)]    $H01M\ 10/052$ [(2010.01)]
$H01M\ 4/02$ [(2006.01)]

(52) Cooperative Patent Classification (CPC):
**C01G 53/00; H01M 4/02; H01M 4/131; H01M 4/36;
H01M 4/505; H01M 4/525; H01M 10/052;
Y02E 60/10**

(86) International application number:
**PCT/KR2022/021441**

(87) International publication number:
**WO 2023/128578 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.12.2021   JP 2021212769**

(71) Applicant: **LG Energy Solution, Ltd.
Seoul 07335 (KR)**

(72) Inventors:
• **CHIHARA, Kuniko**
  **Yokohama-shi, Kanagawa 220--0011 (JP)**
• **MATSUBARA, Keiko**
  **Yokohama-shi, Kanagawa 220--0011 (JP)**

(74) Representative: **Hoffmann Eitle
Patent- und Rechtsanwälte PartmbB
Arabellastraße 30
81925 München (DE)**

(54) **CATHODE ACTIVE MATERIAL, CATHODE ACTIVE MATERIAL SLURRY, CATHODE, LITHIUM ION SECONDARY BATTERY, AND METHOD FOR PREPARING CATHODE ACTIVE MATERIAL**

(57)    Provided are a positive electrode active material for a lithium-ion secondary battery having excellent capacity characteristics and electrode resistance characteristics, a positive electrode active material slurry, a positive electrode, a lithium-ion secondary battery and a method for preparing a positive electrode active material. The positive electrode active material includes a core containing a lithium transition metal oxide, and a coating portion at least partially covering the surface of the core, wherein the coating portion includes magnesium and fluorine, and the spectrum of Mg2p has a peak at 48-50 eV, as determined by X-ray photoelectron spectroscopy.

FIG. 7

EP 4 329 005 A1

**Description**

TECHNICAL FIELD

The present application claims priority to Japanese Patent Application No. 2021-212769 filed on December 27, 2021. The present disclosure relates to a positive electrode active material, a positive electrode active material slurry, a positive electrode, a lithium-ion secondary battery and a method for preparing a positive electrode active material.

BACKGROUND ART

As technical development of mobile instruments has been conducted, secondary batteries as energy sources have been increasingly in demand. Among such secondary batteries, lithium secondary batteries having high energy density and operating voltage and showing long cycle life and a low self-discharge rate have been commercialized and used widely. Currently, active studies have been performed to provide such lithium-ion secondary batteries with high capacity.

For example, known technologies for providing lithium-ion secondary batteries with high capacity include forming a coating film based on a fluorine-based ingredient on the surface of an electrode active material.

[References]

[Patent Documents]

Patent Document 1: Japanese Patent Publication No. 2018-063835

DISCLOSURE

Technical Problem

However, when forming such a coating film, there are cases where electrode resistance characteristics are not obtained sufficiently. Therefore, there is a need for balancing excellent capacity characteristics and electrode resistance characteristics.

Therefore, the present disclosure is directed to providing a positive electrode active material for a lithium-ion secondary battery having excellent capacity characteristics and electrode resistance characteristics, a positive electrode active material slurry, a positive electrode, a lithium-ion secondary battery and a method for preparing a positive electrode active material.

Technical Solution

According to an embodiment of the present disclosure, there is provided a positive electrode active material which includes a core containing a lithium transition metal oxide, and a coating portion at least partially covering the surface of the core, wherein the coating portion includes magnesium and fluorine, and the spectrum of Mg2p has a peak at 48-50 eV, as determined by X-ray photoelectron spectroscopy.

As used herein, 'lithium transition metal oxide' refers to a compound containing lithium and a transition metal and having a transition metal-oxygen bond, and also includes a compound further containing a non-metal element, such as a typical metal element or iodine, other than oxygen. Herein, the term 'covering' refers to at least partially covering the surface of an object, and also includes presence of a chemical bond on the surfaces of particles and covering surfaces of particles physically with no chemical bond. For example, when peaks derived from magnesium and fluorine are detected in the X-ray photoelectron spectroscopy (XPS) of the surfaces of active material particles, this may be referred to as the expression 'a coating portion containing magnesium and fluorine is formed'.

In the positive electrode active material as defined in the above embodiment, the spectrum of F1s observed by X-ray photoelectron spectroscopy of the positive electrode active material may have a peak at 683-685 eV.

In the positive electrode active material as defined in the above embodiment, the content of magnesium may be 0.02-0.5 parts by weight based on 100 parts by weight of lithium transition metal oxide.

In the positive electrode active material as defined in the above embodiment, the content of fluorine may be 0.02-0.5 parts by weight based on 100 parts by weight of lithium transition metal oxide.

In the positive electrode active material as defined in the above embodiment, the coating portion may include iodine.

In the positive electrode active material as defined in the above embodiment, the coating portion may include iodine having an oxidation number of +5 to +7.

In the positive electrode active material as defined in the above embodiment, the content of iodine may be 0.001-5 parts by weight based on 100 parts by weight of lithium transition metal oxide.

In the positive electrode active material as defined in the above embodiment, the lithium transition metal oxide may be represented by the chemical formula of $Li_aNi_xM_yO_2$ (wherein $0 < a \leq 1.05$, $x + y = 1$, $0.4 \leq x \leq 1$, and M is at least one metal element other than Ni).

According to another embodiment of the present disclosure, there is provided a positive electrode active material slurry for a lithium-ion secondary battery, including the positive electrode active material as defined in the above embodiment.

According to still another embodiment of the present disclosure, there is provided a positive electrode for a lithium-ion secondary battery which has a positive electrode active material layer, including the positive electrode active material as defined in the above embodiment and formed on a current collector.

According to still another embodiment of the present disclosure, there is provided a lithium-ion secondary battery including the positive electrode as defined in the above embodiment.

According to yet another embodiment of the present disclosure, there is provided a method for preparing a positive electrode active material, including the steps of: preparing a mixture containing a lithium transition metal oxide, magnesium and fluorine; and firing the mixture, wherein the spectrum of Mg2p of the resultant positive electrode active material has a peak at 48-50 eV, as determined by X-ray photoelectron spectroscopy.

The method for preparing a positive electrode active material as defined in the above embodiment may include a step of firing the mixture at a firing temperature of 150-400°C.

The method for preparing a positive electrode active material as defined in the above embodiment may include a step of adding an ingredient containing magnesium and fluorine as an ingredient of the mixture. The ingredient containing magnesium and fluorine may be magnesium fluoride.

The method for preparing a positive electrode active material as defined in the above embodiment may include a step of adding an iodine-containing iodine ingredient as an ingredient of the mixture. The mixture may include a lithium transition metal oxide, fluorine, magnesium and iodine. As used herein, 'iodine ingredient' refers to any ingredient containing iodine.

Advantageous Effects

According to the present disclosure, it is possible to provide a positive electrode active material for a lithium-ion secondary battery having excellent capacity characteristics and electrode resistance characteristics, a positive electrode active material slurry, a positive electrode, a lithium-ion secondary battery and a method for preparing a positive electrode active material.

DESCRIPTION OF DRAWINGS

FIG. 1 illustrates a part of the spectrum of the positive electrode active material according to each of Examples 1 and 2 and Comparative Examples 1-3, as analyzed by X-ray photoelectron spectroscopy (XPS).

FIG. 2 illustrates a part of the spectrum of the positive electrode active material according to each of Examples 1 and 2 and Comparative Examples 1 and 2, as analyzed by XPS.

FIG. 3 illustrates a part of the spectrum of the positive electrode active material according to each of Examples 1 and 2 and Comparative Examples 1 and 2, as analyzed by XPS.

FIG. 4 illustrates a part of the spectrum of the positive electrode active material according to each of Examples 1 and 2 and Comparative Examples 1-3, as analyzed by XPS.

FIG. 5 is a graph illustrating the conductivity of the coin cell battery obtained from each of Examples 1 and 2 and Comparative Examples 1 and 3 as a function of load.

FIG. 6 is a graph illustrating the volume resistivity of the coin cell battery obtained from each of Examples 1 and 2 and Comparative Examples 1 and 3 as a function of load.

FIG. 7 illustrates a change in battery capacity during the 1st to 250th charge/discharge cycles in the mono-cell battery according to each of Examples 1 and 2 and Comparative Examples 1-3.

FIG. 8 illustrates a change in direct current resistance during the 1st to 300th charge/discharge cycles in the mono-cell battery according to each of Examples 1 and 2 and Comparative Examples 1-3.

FIG. 9 illustrates a change in cell volume during the 50th to 300th charge/discharge cycles in the mono-cell battery according to each of Examples 1 and 2 and Comparative Examples 1-3.

<u>BEST MODE</u>

Hereinafter, preferred embodiments of the present disclosure will be described in detail. However, the description proposed herein is just a preferable example for the purpose of illustrations only, not intended to limit the scope of the disclosure.

With reference to the problem of electrode resistance characteristics that may arise with providing high capacity to a lithium-ion secondary battery, exemplification will be made by a lithium-ion secondary battery using a nickel-rich lithium transition metal oxide as a positive electrode active material in the following description.

In a lithium nickel cobalt manganese ternary positive electrode active material, such as $Li_aNi_xCo_yMn_zO_2$, as a positive electrode material of a lithium-ion secondary battery, it is known that an increase in nickel content in the composition may assist providing the battery with high capacity. Actually, there is a continuous need for providing a lithium-ion secondary battery with high capacity in the market, and thus development of an Ni-rich positive electrode active material having high capacity per unit weight in an operating voltage range of 3.0-4.2 V has been conducted actively as a substitute for conventionally used $LiCoO_2$. However, in such a lithium nickel cobalt manganese ternary positive electrode active material, problems including gas generation at high temperature or degradation of stability in a charged state occur as the content of Ni increases, which becomes a serious problem in the actual application of the positive electrode active material to a battery.

To solve the above-mentioned problems, there has been suggested a method for forming an insulating coating film on the surfaces of positive electrode active material particles in order to improve the stability during charge. Meanwhile, although there are not many reports about a means for inhibiting gas generation, Patent Document 1 discloses forming a fluoride-based coating film on the surface of an Li-excess layered halite-type positive electrode active material. However, an Ni-rich positive electrode having a high Ni content may be easily affected by the surface ion conductivity or electroconductivity. For this, the Ni-rich positive electrode active material is significantly affected by an increase in resistance component caused by such coating film treatment. As such, in the active materials currently in use or development, there is a significant limitation in coating film technologies capable of balancing excellent capacity characteristics with electrode resistance characteristics.

The inventors of the present disclosure have found that when using a lithium transition metal oxide-containing positive electrode active material in a lithium-ion secondary battery, it is possible to obtain a lithium-ion secondary battery having excellent electrode resistance characteristics as well as excellent capacity characteristics by forming a coating portion containing magnesium and fluorine in a predetermined electron state on the surface of a core containing a lithium transition metal oxide. The present disclosure is based on this finding.

[Positive Electrode Active Material]

In one aspect of the present disclosure, there is provided a positive electrode active material which includes a core containing a lithium transition metal oxide, and a coating portion at least partially covering the surface of the core, wherein the coating portion includes magnesium and fluorine, and the spectrum of Mg2p has a peak at 48-50 eV, as determined by X-ray photoelectron spectroscopy. Preferably, the positive electrode active material is a positive electrode active material for a lithium-ion secondary battery.

The positive electrode active material may include one containing a lithium transition metal oxide capable of intercalation/deintercalation of lithium, magnesium and fluorine. The positive electrode active material may be in the form of particles having a core-shell structure formed by a core and a coating portion. The coating portion may totally cover the core or may partially cover the outer surface of the core. The coating portion may be interconnected as a whole or may have a plurality of island-like parts spaced apart from each other. The coating portion may cover a single core, or two or more cores.

(Core)

The core of the positive electrode active material includes a lithium transition metal oxide. For example, the core may be lithium transition metal oxide particles. Meanwhile, the core may include an ingredient other than the lithium transition metal oxide. The shape of the core is not particularly limited and may have an optional shape, such as a spherical, cuboid or polygonal shape. In addition, the particle shape is not particularly limited. For example, the core may be formed of single particles, or may be formed of an aggregate, such as secondary particles formed by aggregation of primary particles. Although there is no particular limitation in the size of the core, the core may have a size of 0.01-30 $\mu$m, 0.1-10 $\mu$m, or the like.

For example, the core of the positive electrode active material may include a nickel-containing lithium transition metal oxide, preferably a nickel-rich lithium transition metal oxide. Herein, 'nickel-rich' refers to a content of nickel of 50 mol% or more based on the total content of transition metals. As described above, a nickel-rich lithium transition metal oxide containing 50 mol% or more of nickel is preferred in terms of inhibition of an increase in electrode resistance. Therefore, when using the positive electrode active material according to this embodiment, it is possible to improve electrode resistance characteristics (i.e. it is possible to reduce an increase in resistance), and thus it is possible to assist balancing of high capacity characteristics with improved electrode resistance characteristics of a lithium-ion secondary battery. For example, the core may include a lithium transition metal oxide containing nickel in an amount of 60 mol% or more, 70 mol% or more, 80 mol% or more, or 90 mol% or more, based on the total content of transition metals.

(Lithium Transition Metal Oxide)

Particular examples of the lithium transition metal oxide may include: lithium-manganese oxide (e.g. $LiMnO_2$, $LiMnO_s$, $LiMn_2O_3$, $LiMn_2O_4$, etc.); lithium-cobalt oxide (e.g. $LiCoO_2$, etc.); lithium-nickel oxide (e.g. $LiNiO_2$, etc.); lithium-copper oxide (e.g. $Li_2CuO_2$, etc.); lithium-vanadium oxide (e.g. $LiVsOs$, etc.); lithium-nickel-manganese oxide (e.g. $LiNi_{1-z}Mn_zO_2$ ($0 < z < 1$), $LiMn_{2-z}Ni_zO_4$ ($0 < z < 2$), etc.); lithium-nickel-cobalt oxide (e.g. $LiNi_{1-y}Co_yO_2$ ($0 < y < 1$), etc.); lithium-manganese-cobalt oxide (e.g. $LiCo_{1-z}Mn_zO_2$ ($0 < z < 1$), $LiMn_{2-y}Co_yO_4$ ($0 < y < 2$), etc.); lithium-nickel-manganese-cobalt oxide (e.g. $Li(Ni_xCo_yMn_z)O_2$ ($0 < x < 1$, $0 < y < 1$, $0 < z < 1$, $x + y + z = 1$), $Li(Ni_xCo_yMn_z)O_4$ ($0 < x < 2$, $0 < y < 2$, $0 < z < 2$, $x + y + z = 2$), etc.); lithium-nickel-cobalt-metal (M) oxide (e.g. $Li(Ni_xCo_yMn_zM_w)O_2$ (wherein M is selected from the group consisting of Al, Fe, V, Cr, Ti, Ta, Mg and Mo, $0 < x < 1$, $0 < y < 1$, $0 < z < 1$, $0 < w < 1$, $x + y + z + w = 1$), etc.); Li-excess solid solution positive electrode (e.g. $pLi_2MnO_3$-$(1-p)Li(Ni_xCo_yMn_z)O_2$ ($0 < x < 1$, $0 < y < 1$, $0 < z < 1$, $x + y + z = 1$, $0 < p < 1$); those compounds in which the transition metal elements are partially substituted with one or more metal elements; or the like. The positive electrode active material layer may include one or more compounds selected from the above-listed compounds, but is not limited thereto.

Particular examples of a nickel-rich lithium transition metal oxide effective for providing a battery with high capacity may include: $Li_aNiO_2$ ($0.5 \leq a \leq 1.5$); $Li_a(Ni_xCo_yMn_z)O_2$ ($0.5 \leq a \leq 1.5$, $0.5 \leq x < 1$, $0 < y < 0.5$, $0 < z < 0.5$, $x + y + z = 1$); $Li_a(Ni_xCo_yMn_z)O_2$ ($0.7 \leq x < 1$, $0 < y < 0.3$, $0 < z < 0.3$, $x + y + z = 1$); $Li_a(Ni_xCo_yMn_z)O_2$ ($0.8 \leq x < 1$, $0 < y < 0.2$, $0 < z < 0.2$, $x + y + z = 1$); $Li_a(Ni_xCo_yMn_z)O_2$ ($0.9 \leq x < 1$, $0 < y < 0.1$, $0 < z < 0.1$, $x + y + z = 1$); $Li_aNi_{1-y}Co_yO_2$ ($0.5 \leq a \leq 1.5$, $0 < y \leq 0.5$); $Li_aNi_{1-z}Mn_zO_2$ ($0.5 \leq a \leq 1.5$, $0 < z \leq 0.5$); $Li_a(Ni_xCo_yMn_z)O_4$ ($0.5 \leq a \leq 1.5$, $1 \leq x < 2$, $0 < y < 1$, $0 < z < 1$, $x + y + z = 2$); $Li_a(Ni_xCo_yM_w)O_2$ (wherein M is one or more elements selected from the group consisting of Al, Fe, V, Cr, Ti, Ta, Mg, Mo, Zr, Zn, Ga and In, $0.5 \leq a \leq 1.5$, $0.5 \leq x < 1$, $0 < y < 0.5$, $0 < w < 0.5$, $x + y + w = 1$); $Li_a(Ni_xCo_yMn_zM_w)O_2$ (wherein M is one or more elements selected from the group consisting of Al, Fe, V, Cr, Ti, Ta, Mg, Mo, Zr, Zn, Ga and In, $0.5 \leq a \leq 1.5$, $0.5 \leq x < 1$, $0 < y < 0.5$, $0 < z < 0.5$, $0 < w < 0.5$, $x + y + z + w = 1$); those compounds in which the transition metal elements are partially substituted with one or more metal elements (e.g. one or more elements selected from Al, Fe, V, Cr, Ti, Ta, Mg, Mo, Zr, Zn, Ga and In); those compounds in which the oxygen atoms are partially substituted with one or more non-metal elements (e.g. one or more elements selected from P, F, S and N); or the like. Preferably, the lithium transition metal oxide may be represented by $Li_aNi_xM_yO_2$ (wherein M is at least one metal element other than Ni, and for example, may be at least one element selected from the group consisting of Al, Fe, Co, Mn, V, Cr, Ti, Ta, Mg, Mo, Zr, Zn, Ga and In, $0 < a \leq 1.05$, and $x + y = 1$), and x may have a value of 0.3 or more, 0.4 or more, 0.5 or more, 0.6 or more, 0.7 or more, 0.8 or more, or 0.9 or more, and 1 or less, 0.9 or less, 0.8 or less, 0.7 or less, 0.6 or less, or 0.5 or less. The positive electrode active material may include one or more compounds selected from the above-listed compounds, but is not limited thereto. In addition, in the same particle, there may be a distribution in a degree of substitution from the inner part to the surface layer. Further, the particle may be surface-coated. For example, the surface coating may include a metal oxide, lithium transition metal oxide, polymer, or the like, but is not limited thereto.

Particularly, in terms of improvement of the capacity characteristics and stability of a battery, preferred lithium transition metal oxides may include $Li_aNiO_2$, $Li_a(Ni_{0.5}Mn_yCo_z)O_2$ ($y + z = 0.5$), $Li_a(Ni_{0.6}Mn_yCo_z)O_2$ ($y + z = 0.4$), $Li_a(Ni_{0.7}Mn_yCo_z)O_2$ ($y + z = 0.3$), $Li_a(Ni_{0.8}Mn_yCo_z)O_2$ ($y + z = 0.2$), $Li_a(Ni_{0.8}Co_yMn_zAl_w)O_2$ ($y + z + w = 0.2$), $Li_a(Ni_{0.85}Co_yMn_z)O_2$ ($y + z = 0.15$), $Li_a(Ni_{0.85}Co_yMn_zAl_w)O_2$ ($y + z + w = 0.15$), $Li_a(Ni_{0.9}Co_yMn_z)O_2$ ($y + z = 0.1$), $Li_a(Ni_{0.9}Co_yMn_zAl_w)O_2$ ($y + z + w = 0.1$), $Li_a(Ni_{0.9}Co_yMn_z)O_2$ ($y + z = 0.1$), $Li_a(Ni_{0.95}Co_yMn_zAl_w)O_2$ ($y + z + w = 0.05$), or the like. Herein, the range of 'a' values may satisfy the condition of $0.5 \leq a \leq 1.5$, preferably $1.0 \leq a \leq 1.5$.

More particularly, preferred are $LiNiO_2$, $Li(Ni_{0.5}Mn_{0.3}Co_{0.2})O_2$, $Li(Ni_{0.6}Mn_{0.2}Co_{0.2})O_2$, $Li(Ni_{0.7}Mn_{0.15}Co_{0.15})O_2$, $Li(Ni_{0.8}Mn_{0.1}Co_{0.1})O_2$, $Li(Ni_{0.8}Co_{0.15}Al_{0.05})O_2$, $Li(Ni_{0.8}Co_{0.1}Mn_{0.05}Al_{0.05})O_2$, $Li(Ni_{0.85}Co_{0.10}Mn_{0.05})O_2$, $Li(Ni_{0.85}Co_{0.10}Mn_{0.03}Al_{0.02})O_2$, $Li(Ni_{0.9}Co_{0.05}Mn_{0.05})O_2$, $Li(Ni_{0.9}Co_{0.05}Al_{0.05})O_2$, $Li(Ni_{0.95}Co_{0.03}Mn_{0.02})O_2$, $Li(Ni_{0.95}Co_{0.03}Al_{0.02})O_2$, or the like.

(Coating Portion)

The coating portion of the positive electrode active material partially or totally covers the core surface. The coating portion includes magnesium and fluorine. The coating portion is obtained by firing a mixture containing a lithium transition metal oxide, magnesium and fluorine. For example, the coating portion may be obtained by mixing a first ingredient containing a lithium transition metal oxide with a second ingredient containing magnesium and fluorine, followed by firing. The coating portion of the positive electrode active material may be present independently from the lithium transition metal oxide-containing core, or may be at least partially bound chemically or physically to the surfaces of lithium transition metal oxide particles forming the core. Preferably, the coating portion is at least partially in contact with the lithium transition metal oxide particles. The coating portion may be at least partially contained in the structure of lithium transition metal oxide. Meanwhile, the ingredients of the coating portion are not limited to chemical species independent as a compound but may include any chemical species, such as an ion, atom or atomic group. Although the thickness of the coating portion is not particularly limited, the core surface is limited in electrical conductivity when the coating portion totally covers the cores surface or has a large thickness. Therefore, the thickness of the coating portion is preferably 0.1-10 nm, and more preferably 3-5 nm. In addition, it is effective to use a conductive material (e.g. carbon nanotubes, or the like) with which particles are interconnected in order to inhibit degradation of the electrical conductivity.

For example, the content of the coating portion in the positive electrode active material may be 0.001-10.0 wt%, preferably 0.01-1.0 wt%, more preferably 0.02-0.5 wt%, and even more preferably 0.05-0.2 wt%. When the content of the coating portion is 0.001 wt% or more, it is expected that the cycle characteristics or electrode resistance characteristics of a battery are improved.

(Magnesium Ingredient)

The coating portion in the positive electrode active material after firing includes magnesium. The magnesium compounds contained in the coating portion may include magnesium hydroxide, magnesium oxide, magnesium iodide, or the like. Magnesium contained in the coating portion may be bound with an element (lithium, transition metal, oxygen, or the like) forming the lithium transition metal oxide, or iodine.

For example, in the positive electrode active material, the content of magnesium may be 0.02-0.5 parts by weight based on 100 parts by weight of lithium transition metal oxide. When the content of magnesium is 0.02 parts by weight or more, the core is covered sufficiently, and thus it is expected that the electrode resistance characteristics or cycle characteristics of a battery are improved. When the content of magnesium is 0.5 parts by weight or less, it is thought that an increase in resistance of the electrode caused by excessive coating is inhibited. The content of magnesium is preferably 0.03-0.4 parts by weight, more preferably 0.04-0.3 parts by weight, and more preferably 0.05-0.2 parts by weight, based on 100 parts by weight of lithium transition metal oxide.

(Fluorine Ingredient)

The coating portion in the positive electrode active material after firing includes fluorine. For example, the fluorine compounds contained in the coating portion may include lithium fluoride, nickel fluoride, or the like. Fluorine contained in the coating portion may be bound with an element (lithium, transition metal, oxygen, or the like) forming the lithium transition metal oxide, or iodine. For example, the coating portion may include fluoride ion bound with the metal ion of the lithium transition metal oxide. For example, the coating portion may include a bond of the metal ion of the lithium transition metal oxide with fluoride ion.

For example, in the positive electrode active material, the content of fluorine may be 0.02-0.5 parts by weight based on 100 parts by weight of lithium transition metal oxide. When the content of fluorine is 0.02 parts by weight or more, the core is covered sufficiently, and thus it is expected that the electrode resistance characteristics or cycle characteristics of a battery are improved. When the content of fluorine is 0.5 parts by weight or less, it is thought that an increase in resistance of the electrode caused by excessive coating is inhibited. The content of fluorine is preferably 0.03-0.4 parts by weight, more preferably 0.04-0.3 parts by weight, and more preferably 0.05-0.2 parts by weight, based on 100 parts by weight of lithium transition metal oxide.

(Iodine Ingredient)

The coating portion may include iodine. Preferably, the coating portion in the positive electrode active material after firing includes iodine having a positive oxidation number. For example, the coating portion includes iodine having an oxidation number of +1 to +7, preferably includes iodine having an oxidation number of +2 to +7, more preferably includes iodine having an oxidation number of +5 to +7, and even more preferably includes iodine having an oxidation number of +7. Iodine having a positive oxidation number frequently has strong oxidizing power. For example, iodine compounds having a positive oxidation number include iodic acid, such as iodic acid ($HIO_3$), meta-periodic acid ($HIO_4$) or ortho-periodic acid (HsIOe); iodate, such as lithium iodate ($LiIO_3$), sodium iodate ($NaIO_3$), potassium iodate ($KIO_3$), ammonium iodate ($NH_4IO_3$), lithium periodate ($LiIO_4$), sodium periodate ($NaIO_4$) or potassium periodate ($KIO_4$); iodine oxide, such as iodine (IV) oxide ($I_2O_4$), iodine (V) oxide ($I_2O_5$) or iodine (IV, V) oxide($I_4O_9$); or the like. The coating portion may include periodate ion or hydroperiodate ion. Periodate ion may include meta-periodate ion ($IO_4^-$), ortho-periodate

ion ($IO_6^{5-}$), or the like, and hydroperiodate ions may include $HIO_6^{4-}$, $H_2IO_6^{3-}$, $H_3IO_6^{2-}$, $H_4IO_6^-$, or the like. In addition, iodine contained in the coating portion may be bound to the element (lithium, transition metal, oxygen, or the like) forming the lithium transition metal oxide, or to fluorine. For example, the coating portion may include iodate ion ($IO_3^-$) or periodate ion bound with the metal ion of the lithium transition metal oxide. For example, the coating portion may include a bond of a metal cation of lithium transition metal oxide, or the like, with periodate ion, particularly, a bond of a metal cation with periodate ion ($IO_4^-$).

In the positive electrode active material, the content of iodine based on 100 parts by weight of lithium transition metal oxide may be 0.001-5 parts by weight. When the content of iodine is 0.001 parts by weight or more, it is expected that the electrode resistance characteristics or cycle characteristics of a battery are improved. When the content of iodine is 5 parts by weight or less, it is thought that side reactions caused by excessive coating are inhibited. The content of iodine based on 100 parts by weight of lithium transition metal oxide is preferably 0.005-2 parts by weight, more preferably 0.01-1 parts by weight, and even more preferably 0.05-0.5 parts by weight.

(XPS Spectrum of Positive Electrode Active Material)

The spectrum of the positive electrode active material observed by X-ray photoelectron spectroscopy (XPS) has a peak derived from Mg2p electron of magnesium. When charge correction is made with the energy of C1s peak top derived from $-(CH_2)_n-$ of 284.6 eV, the spectrum of Mg2p has a peak at 48-50 eV. The peak location is preferably at 48.5-49.8 eV, more preferably 49.0-49.5 eV. Herein, 'peak location' refers to the location (energy) of the peak maximum value.

The spectrum of the positive electrode active material observed by X-ray photoelectron spectroscopy (XPS) has a peak derived from F1s electron of fluorine. When charge correction is made with the energy of C1s peak top derived from $-(CH_2)_n-$ of 284.6 eV, the spectrum of F1s has a peak at 683-685 eV. The peak location is preferably at 683.5-684.8 eV, more preferably 684-684.5 eV.

The spectrum of the positive electrode active material observed by X-ray photoelectron spectroscopy (XPS) has a peak derived from $I3d_{5/2}$ electron of iodine. When charge correction is made with the energy of C1s peak top derived from $-(CH_2)_n-$ of 284.6 eV, the spectrum of $I3d_{5/2}$ has a peak at 622-626 eV. The peak location is preferably 623-625 eV, and more preferably 623.5-624.5 eV. The peak is derived from iodine having a positive oxidation number. For example, the peak is derived from iodine having an oxidation number of +1 to +7, preferably from iodine having an oxidation number of +3 to +7, more preferably from iodine having an oxidation number of +5 to +7, and even more preferably from iodine having an oxidation number of +7.

According to an embodiment of the present disclosure, the X-ray photoelectron spectroscopy may be carried out by using a system, such as Quantera SXM (Ulvac-PHI).

It is thought that the coating portion improves the capacity characteristics and electrode resistance characteristics of a battery and inhibits degradation of cycle characteristics by the following mechanism. However, the following mechanism is merely an exemplary supposition assisting the understanding of the present disclosure, and the scope of the present disclosure is not limited thereto.

It is thought that once the lithium transition metal oxide, magnesium and fluorine are mixed and fired, magnesium and fluorine cause a chemical reaction, individually or in cooperation with each other, on the lithium transition metal oxide to form a coating portion containing magnesium and/or fluorine, but the details are not clear.

It is thought that the formed coating portion at least partially covers the surface of the core containing a lithium transition metal oxide. Since the coating portion inhibits a chemical reaction of the lithium transition metal oxide with the electrolyte to inhibit formation of side reaction products, it is thought that adverse effects, such as formation of side reaction products on the positive electrode active material during repetition of charge/discharge, leading to inhibition of cell reactions or an increase in electrical resistance of a battery, can be inhibited.

In addition, when oxygen of the lithium transition metal oxide is substituted with fluorine by the addition of fluorine, it is expected that the reactivity of the positive electrode active material with an electrolyte is reduced. When fluorine reacts with lithium to form lithium fluoride (known as an ingredient forming a solid electrolyte interphase (SEI) coating film), it is expected that the reactivity is reduced through the function of protecting the particle surfaces. In addition, it is thought that the lithium fluoride coating film has a difficulty in inhibiting lithium intercalation/deintercalation, as compared to an oxide coating film, or the like. Such substitution of oxygen with fluorine or formation of lithium fluoride may occur as charge/discharge cycles are repeated. It is also thought that gas generation may be inhibited, since side reactions with an electrolyte is inhibited as mentioned above.

As described in the following Examples, it is shown that an increase in the electrode resistance tends to be inhibited in the positive electrode active material obtained by adding magnesium and fluorine and carrying out firing. It is possible to inhibit an increase in electrode resistance caused by the coating portion through the functions of magnesium and fluorine, while realizing improvement and stabilization of battery performance by the coating portion. Meanwhile, it is not clear whether or not the magnesium-containing coating film and the fluorine-containing coating film are formed individually and function independently from each other, or whether any interaction is present or not between magnesium and fluorine.

Particularly, a nickel-rich lithium transition metal oxide is significantly affected by an increase in electrode resistance. Therefore, even a fluoride-based coating film reported as functioning effectively in lithium cobalt oxide, or the like, causes an increase in electrode resistance in the case of a nickel-rich lithium transition metal oxide, and thus there are times when sufficient battery performance may not be obtained. In this context, when forming a coating portion containing magnesium and fluorine as mentioned above, it is possible to accomplish a balance of capacity characteristics with electrode resistance characteristics, even when using a nickel-rich lithium transition metal oxide easily affected by the electrode resistance. In general, a battery using a nickel-rich lithium transition metal oxide tends to have increased capacity, and thus there is an advantage in terms of providing a battery with high capacity.

In addition, as described in the following Examples, it is shown that when further adding iodine to magnesium fluoride, it is possible to retain the discharge capacity over longer charge/discharge cycles and to inhibit an increase in linear resistance when repeating charge/discharge cycles. The coating portion formed when adding iodine may contain iodine having a positive oxidation number and strong electron attraction force as described above. According to the knowledge of the related art, it is known that electrons are drawn to highly electronegative I by mixing a solid electrolyte with LiI, thereby improving the ion conductivity of Li. From this, it is thought that Li has improved conductivity by the coating portion during charge, thereby accelerating the redox reaction of the positive electrode active material. As a result, it is thought that side reactions, such as decomposition of an electrolyte, generated during charge are inhibited, and thus an increase in electrode resistance at the positive electrode is inhibited, resulting in stable long-term cycle characteristics.

[Method for Preparing Positive Electrode Active Material]

In another aspect of the present disclosure, there is provided a method for preparing a positive electrode active material, including the steps of: preparing a mixture including a lithium transition metal oxide, magnesium and fluorine; and firing the resultant mixture. The spectrum of Mg2p of the resultant positive electrode active material has a peak at 48-50 eV, as determined by X-ray photoelectron spectroscopy.

(1) Mixing

In the mixing process, a mixture containing at least one lithium transition metal oxide, magnesium and fluorine is prepared. Hereinafter, the resultant mixture is referred to as 'mixture before firing'. For example, in the mixing process, all of the lithium transition metal oxide, magnesium source and fluorine source may be mixed in a solid state. For example, a powdery lithium transition metal oxide, magnesium source and fluorine source may be mixed to obtain a powdery mixture. Since the ingredients are mixed in a solid state, the mixing process may be carried out in a simple manner so that it may be cost-efficient and amenable to mass production. Meanwhile, the magnesium source and fluorine source may be derived from a common ingredient. The mixing process is not limited to a particular process, and any known process may be used. Particular examples of the mixing process include manual mixing, mortar (manual or automatic), ball mill, planetary mill, vibration mill, rotor mill, hammer mill, disper mill, mixer, homogenizer, or the like. The mixing step may be carried out in the air or under other atmospheres, such as inert atmosphere. In addition, any optional ingredient other than the lithium transition metal oxide, magnesium source and fluorine source may be added.

(Magnesium Ingredient)

The magnesium ingredient is an ingredient used to introduce magnesium to the positive electrode active material. The magnesium ingredient is preferably in a solid state at room temperature with a view to easy mixing with the lithium transition metal oxide. Particular examples of the magnesium ingredient include at least one selected from the group consisting of simple substance magnesium, magnesium fluoride, magnesium chloride, magnesium bromide, magnesium iodide, magnesium oxide, magnesium sulfide, magnesium sulfate, magnesium carbonate, magnesium nitrate, magnesium nitrite and magnesium phosphate. Any magnesium ingredient other than the above-listed ingredients may be used, as long as it does not adversely affect the characteristics of a battery. Meanwhile, the valence number of magnesium in the magnesium ingredient is not particularly limited.

(Fluorine Ingredient)

The fluorine ingredient is an ingredient used to introduce fluorine to the positive electrode active material. The fluorine ingredient is preferably in a solid state at room temperature with a view to easy mixing with the lithium transition metal oxide. Particular examples of the fluorine ingredient include at least one selected from the group consisting of magnesium fluoride, lithium fluoride, sodium fluoride, potassium fluoride, rubidium fluoride, cesium fluoride, calcium fluoride, strontium fluoride and barium fluoride. Any fluorine ingredient other than the above-listed ingredients may be used, as long as it does not adversely affect the characteristics of a battery. Meanwhile, the valence number of fluorine in the fluorine ingredient is not particularly limited.

The magnesium ingredient and the fluorine ingredient may be derived from a common ingredient. For example, an ingredient containing magnesium and fluorine may be added as an ingredient of the mixture, and the ingredient containing magnesium and fluorine may be magnesium fluoride. For example, in the mixing process, the following ingredients (a) and (b) may be mixed, ingredients (a), (b) and (c-1) may be mixed, (a), (b) and (c-2) may be mixed, (a), (c-1) and (c-2) may be mixed, or (a), (b), (c-1) and (c-2) may be mixed:

(a) at least one lithium transition metal oxide;
(b) magnesium fluoride;
(c-1) at least one selected from the group consisting of simple substance magnesium, magnesium chloride, magnesium bromide, magnesium iodide, magnesium oxide, magnesium sulfide, magnesium sulfate, magnesium carbonate, magnesium nitrate, magnesium nitrite and magnesium phosphate; and
(c-2) at least one selected from the group consisting of magnesium fluoride, lithium fluoride, sodium fluoride, potassium fluoride, rubidium fluoride, cesium fluoride, calcium fluoride, strontium fluoride and barium fluoride.

(Iodine Ingredient)

An iodine-containing iodine ingredient may be added as an ingredient of the mixture. In this case, the mixture before firing may include a lithium transition metal oxide, fluorine, magnesium and iodine. The iodine ingredient is an ingredient used to introduce iodine to the positive electrode active material. The iodine ingredient is preferably in a solid state at room temperature with a view to easy mixing with the lithium transition metal oxide. For example, the iodine ingredient may include at least one selected from the group consisting of simple substance iodine ($I_2$), lithium iodide (LiI), sodium iodide (NaI), potassium iodide (KI), iodoform ($CHI_3$), carbon tetraiodide ($CI_4$), ammonium iodide ($NH_4I$), iodic acid ($HIO_3$), lithium iodate ($LiIO_3$), sodium iodate ($NaIO_3$), potassium iodate ($KIO_3$), ammonium iodate ($NH_4IO_3$), meta-periodic acid ($HIO_4$), ortho-periodic acid ($HsIOe$), lithium periodate ($LiIO_4$), sodium periodate ($NaIO_4$), potassium periodate ($KIO_4$), iodine oxide (IV) ($I_2O_4$), iodine oxide (V) ($I_2O_5$) and iodine oxide (IV, V) ($I_4O_9$). Any iodine ingredient, such as metal iodide or iodine-containing organic compound, other than the above-listed ingredients may be used, as long as it does not adversely affect the characteristics of a battery. Meanwhile, the valence number of iodine in the iodine ingredient is not particularly limited.

For example, the amount of lithium transition metal oxide added in the mixing process is 85-99.98 parts by weight, preferably 90-99.9 parts by weight, and more preferably 95-99.5 parts by weight, based on 100 parts by weight of the total weight of the mixture before firing.

For example, the amount of magnesium ingredient added in the mixing process is 0.02-0.5 parts by weight, preferably 0.03-0.4 parts by weight, more preferably 0.04-0.3 parts by weight, and even more preferably 0.05-0.2 parts by weight, based on 100 parts by weight of the total weight of the mixture before firing. When the added amount of magnesium ingredient is 0.02 parts by weight or more, it is expected that the core is coated sufficiently, and thus the electrode resistance characteristics or cycle characteristics of a battery are improved. When the added amount of magnesium is 0.5 parts by weight or less, it is thought that an increase in electrode resistance caused by excessive coating is inhibited.

For example, the amount of fluorine ingredient added in the mixing process is 0.02-0.5 parts by weight, preferably 0.03-0.4 parts by weight, more preferably 0.04-0.3 parts by weight, and even more preferably 0.05-0.2 parts by weight, based on 100 parts by weight of the total weight of the mixture before firing. When the added amount of fluorine ingredient is 0.02 parts by weight or more, it is expected that the core is coated sufficiently, and thus the electrode resistance characteristics or cycle characteristics of a battery are improved. When the added amount of fluorine is 0.5 parts by weight or less, it is thought that an increase in electrode resistance caused by excessive coating is inhibited.

For example, the amount of iodine ingredient added in the mixing process is 0.001-5 parts by weight, preferably 0.01-4 parts by weight, more preferably 0.05-3 parts by weight, and even more preferably 0.1-2 parts by weight, based on 100 parts by weight of the total weight of the mixture before firing. When the added amount of iodine ingredient is 0.001 parts by weight or more, it is expected that the electrode resistance characteristics or cycle characteristics of a battery are improved. When the added amount of iodine is 5 parts by weight or less, it is thought that excessive side reactions are inhibited.

(2) Firing

In the firing process, the mixture before firing, obtained from the mixing process, is fired to obtain a positive electrode active material. The firing process is carried out preferably in the presence of oxygen, more preferably under ambient atmosphere, but may be carried out under any atmosphere other than the above. For example, the firing process may be carried out under inert atmosphere, such as nitrogen atmosphere or rare gas atmosphere including argon atmosphere. When the firing is carried out under the ambient atmosphere, the firing step may be carried out in a simple manner, and thus is cost-efficient and amenable to mass production.

For example, the firing temperature at which the mixture is fired may be 150-400°C, preferably 200-390°C, more preferably 250-380°C, and even more preferably 300-375°C. When the firing temperature is 150°C or higher, it is thought that the reaction of magnesium ingredient, fluorine ingredient and iodine ingredient may be accelerated. In addition, when the firing temperature is 400°C or lower, side reactions of the magnesium ingredient or fluorine ingredient and excessive formation of side reaction products may be inhibited. In addition, the firing temperature at which the mixture is fired is preferably equal to or higher than the melting point of magnesium ingredient, fluorine ingredient and iodine ingredient, and is more preferably equal to or higher than the boiling point of magnesium ingredient, fluorine ingredient and iodine ingredient.

For example, the firing time during which the mixture is maintained at the firing temperature may be 1-12 hours, preferably 1-9 hours, more preferably 1.5-6 hours, and even more preferably 2-5 hours. When the firing time is 1 hour or more, it is thought that the magnesium ingredient and fluorine ingredient may be allowed to react within a desired range. In addition, when the firing time is 12 hours or less, the firing is not carried out for an excessively long time, and thus it is possible to inhibit an increase in cost.

[Positive Electrode Active Material Slurry]

In still another aspect of the present disclosure, there is provided a positive electrode active material slurry for a lithium-ion secondary battery, including the above-described positive electrode active material. For example, the positive electrode active material slurry includes the positive electrode active material, a conductive material, a binder and a solvent.

The content of the positive electrode active material contained in the positive electrode active material layer may be 80-99.5 wt% based on the total weight of the positive electrode active material layer. Preferably, the content of the positive electrode active material may be 85-98.5 wt% based on the total weight of the positive electrode active material layer. When the content of the positive electrode active material falls within the above-defined range, it is possible to realize excellent capacity characteristics. However, when the content of the positive electrode active material is less than the above-defined range, the coating amount on the positive electrode is increased to cause an increase in thickness, and thus it is likely that sufficient volume energy density cannot be accomplished. When the content of the positive electrode active material exceeds the above-defined range, the binder and conductive material are insufficient, resulting in degradation of the conductivity and adhesion of the electrode and degradation of the battery performance.

(Conductive Material)

The conductive material is not particularly limited, as long as it is an electrically conductive material causing no chemical change in the corresponding battery. Particular examples of the conductive material include, but are not limited to: a carbonaceous material, such as artificial graphite, natural graphite, carbon black, acetylene black, Ketjen black, denka black, thermal black, channel black, furnace black, lamp black or thermal black, carbon nanotubes, carbon fibers, or the like; metal powder or metal fibers, such as aluminum, tin, bismuth, silicon, antimony, nickel, copper, titanium, vanadium, chromium, manganese, iron, cobalt, zinc, molybdenum, tungsten, silver, gold, lanthanum, ruthenium, platinum, iridium, or the like; conductive whisker, such as zinc oxide or potassium titanate; conductive metal oxide, such as titanium oxide; conductive polymers, such as polyaniline, polythiophene, polyacethylene, polypyrrole, polyphenylene derivatives, or the like. Such conductive materials may be used alone or in combination.

The content of conductive material may be 0.1-30 wt% based on the total weight of the positive electrode active material layer. The content of conductive material may be preferably 0.5-15 wt%, more preferably 0.5-5 wt%, based on the total weight of the positive electrode active material layer. When the content of conductive material satisfies the above-defined range, it is possible to impart sufficient conductivity, and to ensure the battery capacity, since the content of the positive electrode active material is not reduced.

(Binder)

The binder is an ingredient that assists the binding of the active material with the conductive material and the binding with a current collector. Particular examples of the binder include, but are not limited to: polyvinylidene fluoride (PVDF), polyvinyl alcohol (PVA), polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene terpolymer (EPDM), sulfonated EPDM, styrene butadiene rubber (SBR), fluororubber, various copolymers thereof, or the like. Such binders may be used alone or in combination.

The content of binder may be 0.1-30 wt% based on the total weight of the positive electrode active material layer. The content of binder may be preferably 0.5-15 wt%, more preferably 0.5-5 wt%, based on the total weight of the positive electrode active material layer. When the content of binder satisfies the above-defined range, it is possible to impart sufficient adhesion to the electrode, while preventing degradation of the capacity characteristics of a battery.

(Solvent)

The solvent used for the positive electrode active material slurry is not particularly limited, as long as it is one used conventionally for manufacturing a positive electrode. Particular examples of the solvent include, but are not limited to: amine-based solvents, such as N,N-dimethylaminopropylamine, diethylene triamine, N,N-dimethylformamide (DMF), or the like; ether-based solvents, such as tetrahydrofuran; ketone-based solvents, such as methyl ethyl ketone; ester-based solvents, such as methyl acetate; amide-based solvents, such as dimethyl acetamide, 1-methyl-2-pyrrolidone (NMP), or the like; dimethyl sulfoxide (DMSO); water; or the like. Such solvents may be used alone or in combination.

The solvent may be used in such an amount that it may provide a viscosity with which the slurry may show an excellent level of thickness uniformity upon the application thereof to a positive electrode current collector, while the positive electrode active material, conductive material and binder are dissolved or dispersed, considering the coating thickness or production yield of slurry.

[Method for Preparing Positive Electrode Active Material Slurry]

The positive electrode active material slurry is obtained by adding the conductive material, binder, solvent, or the like, to the above-described positive electrode active material, followed by mixing. If necessary, other additives, such as a dispersant and thickener, may be added.

[Positive Electrode]

In still another aspect of the present disclosure, there is provided a positive electrode for a lithium-ion secondary battery, including a positive electrode active material layer containing the above-described positive electrode active material and formed on a current collector. In other words, the positive electrode includes a positive electrode current collector, and a positive electrode active material layer formed on one surface or both surfaces of the positive electrode current collector. The positive electrode active material layer may be formed totally or partially on the surface of the positive electrode current collector. For example, the positive electrode is a positive electrode for an electrolyte-containing lithium-ion secondary battery.

(Positive Electrode Current Collector)

The positive electrode current collector used for the positive electrode is not particularly limited, as long as it may be used electrochemically stably and has conductivity. Particular examples of the positive electrode current collector include: stainless steel; aluminum; nickel; titanium; or alloys thereof, combinations thereof or mixtures thereof. In addition, baked carbon, or aluminum or stainless steel surface-treated with carbon, nickel, titanium, silver, etc. may also be used.

The positive electrode current collector may have a thickness of 3-500 $\mu$m. Fine surface irregularities may be formed on the surface of the positive electrode current collector to enhance the adhesion to the positive electrode active material. For example, the positive electrode current collector may have various shapes, such as a film, sheet, foil, net, porous body, foam or non-woven web body.

(Positive Electrode Active Material Layer)

The positive electrode active material layer includes the above-described positive electrode active material, conductive material and binder. For example, the positive electrode active material layer may have a thickness of 1 nm to 100 $\mu$m, 10 nm to 10 $\mu$m, or 100 nm to 1 $\mu$m. The positive electrode active material layer may be formed directly on the positive electrode current collector, or may be formed with another layer interposed between the positive electrode active material layer and the positive electrode current collector. In addition, an additional layer, such as a protective film, may be formed on the positive electrode active material layer.

The positive electrode active material layer may include a conductive material including carbon nanotubes. In this case, the electrode impedance may be reduced significantly, and thus the electrode resistance characteristics may be improved.

[Method For Manufacturing Positive Electrode]

A positive electrode including a positive electrode active material layer formed on a positive electrode current collector may be obtained by applying the positive electrode active material slurry to the positive electrode current collector, and carrying out drying and pressing.

In a variant, the positive electrode may be obtained by casting the positive electrode active material slurry onto another support and peeling from the support to obtain a film, and then laminating the film on the positive electrode current collector. In addition, other optional methods may be used to form a positive electrode active material layer on a positive electrode current collector.

[Lithium-Ion Secondary Battery]

In yet another aspect of the present disclosure, there is provided a lithium-ion secondary battery including the positive electrode. For example, the lithium-ion secondary battery includes the positive electrode, a negative electrode, a separator interposed between the positive electrode and the negative electrode, and a non-aqueous electrolyte. Meanwhile, when using a solid electrolyte as a non-aqueous electrolyte, the separator may be omitted. The lithium-ion secondary battery may optionally include a battery casing configured to receive an electrode assembly including the positive electrode, a negative electrode and a separator, and a sealing member configured to seal the battery casing.

[Negative Electrode]

In the lithium-ion secondary battery as defined in the above-described embodiment, the negative electrode includes a negative electrode current collector and a negative electrode active material layer formed on one surface or both surfaces of the negative electrode current collector. The negative electrode may be formed totally or partially on the surface of the negative electrode current collector.

(Negative Electrode Current Collector)

The negative electrode current collector used for the negative electrode is not particularly limited, as long as it may be used electrochemically stably and has conductivity. Particular examples of the negative electrode current collector include: copper; stainless steel; aluminum; nickel; titanium; baked carbon; copper or stainless steel surface-treated with carbon, nickel, titanium, silver, etc.; aluminum-cadmium alloy; or the like.

The negative electrode current collector may have a thickness of 3-500 $\mu$m. Fine surface irregularities may be formed on the surface of the negative electrode current collector to enhance the adhesion to the negative electrode active material. For example, the negative electrode current collector may have various shapes, such as a film, sheet, foil, net, porous body, foam or non-woven web body.

(Negative Electrode Active Material Layer)

The negative electrode active material layer includes a negative electrode active material, a conductive material and a binder. For example, the negative electrode active material layer may have a thickness of 1 nm to 100 $\mu$m, 10 nm to 10 $\mu$m, or 100 nm to 1 $\mu$m. The negative electrode active material layer may be formed directly on the negative electrode current collector, or may be formed with another layer interposed between the negative electrode active material layer and the negative electrode current collector. In addition, an additional layer, such as a protective film, may be formed on the negative electrode active material layer.

For example, the negative electrode active material layer may be formed by applying a negative electrode active material slurry including a mixture of a negative electrode active material, a binder and a conductive material, dissolved or dispersed in a solvent, to a negative electrode current collector, and carrying out drying and pressing. If necessary, the mixture may further include a dispersant, a filler or other optional additives.

(Negative Electrode Active Material)

The negative electrode active material may include a compound capable of reversible lithium-ion intercalation/deintercalation. Particular examples of the negative electrode active material include, but are not limited to: carbonaceous materials, such as artificial graphite, natural graphite, graphitized carbon fibers and amorphous carbon; silicon-based materials, such as silicon powder, amorphous silicon, silicon nanofibers and silicon nanowires; silicon compounds, such as silicon alloys, silicon oxides, and alkali metal- or alkaline earth metal-doped silicon oxides; metallic materials capable of alloying with lithium, such as Al, Sn, Pb, Zn, Bi, In, Mg, Ga, Cd, Sn alloys, Al alloys, or the like; metal oxides capable of lithium doping/dedoping, such as $SnO_2$, vanadium oxides and lithium vanadium oxides; composites of a silicon-based material with a carbonaceous material or other composites, such as Sn-C composite; or the like. Such negative electrode active materials may be used alone or in combination. Meanwhile, the carbonaceous materials may include low-crystallinity carbon or high-crystallinity carbon. Low-crystallinity carbon include soft carbon and hard carbon. High-crystallinity carbon include amorphous, sheet-like, flake-like, spherical or fibrous natural graphite or artificial graphite, kish graphite, pyrolyzed carbon, mesophase pitch-based carbon fibers, mesocarbon microbeads, mesophase pitch, high temperature-fired carbon, such as petroleum/coal-based cokes.

The negative electrode active material may be used in an amount of 80-99 wt% based on the total weight of the negative electrode active material layer.

(Binder and Conductive Material)

The types and contents of the binder and the conductive material used for the negative electrode slurry may be the same as described above with reference to the positive electrode.

(Solvent)

The solvent used for negative electrode slurry is not particularly limited, as long as it is used conventionally for manufacturing a negative electrode. Particular examples of the solvent include, but are not limited to: N-methyl-2-pyrrolidone (NMP), dimethyl sulfoxide (DMSO), isopropyl alcohol, acetone, water, or the like. Such solvents may be used alone or in combination.

[Method for Manufacturing Negative Electrode]

The method for manufacturing the negative electrode for a lithium-ion secondary battery according to an embodiment of the present disclosure may include the steps of: dissolving or dispersing a negative electrode active material optionally with a binder, a conductive material, or the like, in a solvent to obtain a negative electrode slurry; and forming a negative electrode active material layer on a negative electrode current collector, for example, by applying the negative electrode slurry to a negative electrode current collector to obtain a negative electrode, similarly to the method for manufacturing a positive electrode.

[Separator]

In the lithium-ion secondary battery according to an embodiment of the present disclosure, the separator functions to separate the negative electrode and the positive electrode from each other and to provide a lithium-ion transport channel. Any separator may be used with no particular limitation, as long as it is used conventionally as a separator for a lithium-ion secondary battery. Particularly, the separator preferably shows low resistance against electrolyte ion migration and high wettability with an electrolyte. Particular examples of the separator may include a porous polymer film, such as a porous polymer film made of a polyolefin-based polymer, including ethylene homopolymer, propylene homopolymer, ethylene/butene copolymer, ethylene/hexene copolymer or ethylene/methacrylate copolymer, or a laminate having two or more layers of such porous polymer films. In addition, a conventional porous non-woven web, such as a nonwoven web made of high-melting point glass fibers, polyethylene terephthalate fibers, or the like, may be used. Further, a separator coated with a ceramic ingredient or polymer material in order to ensure heat resistance or mechanical strength may be used.

[Non-Aqueous Electrolyte]

In the lithium-ion secondary battery according to an embodiment of the present disclosure, the non-aqueous electrolyte may include an organic liquid electrolyte, an inorganic liquid electrolyte, or the like, which may be used for manufacturing a secondary battery, but is not limited thereto. For example, a solid electrolyte may be used.

The non-aqueous electrolyte may include an organic solvent and a lithium salt, and may further include additives, if necessary. Hereinafter, the liquid electrolyte is also referred to as 'electrolyte'.

The organic solvent is not particularly limited, as long as it can function as a medium through which ions participating in the electrochemical reactions of a battery can be transported. Particular examples of the organic solvent include, but are not limited to: ester-based solvents, such as methyl acetate, ethyl acetate, $\gamma$-butyrolactone and $\epsilon$-caprolactone; ether-based solvents, such as dibutyl ether and tetrahydrofuran; ketone-based solvents, such as cyclohexanone; aromatic hydrocarbon-based solvents, such as benzene and fluorobenzene; carbonate-based solvents, such as dimethyl carbonate (DMC), diethyl carbonate (DEC), methyl ethyl carbonate (MEC), ethyl methyl carbonate (EMC), ethylene carbonate (EC) and propylene carbonate (PC); alcohol-based solvents, such as ethyl alcohol and isopropyl alcohol; nitrile-based solvents, such as R-CN (wherein R is a C2-C20 linear, branched or cyclic hydrocarbon group, which may optionally include a double bonded aromatic ring or ether bond); amide-based solvents, such as dimethyl formamide; dioxolane-based solvents, such as 1,3-dioxolan; sulforane-based solvents, or the like. Such solvents may be used alone or in combination. Particularly, carbonate-based solvents are preferred. In addition, more preferred is a mixture capable of enhancing the charge/discharge characteristics of a battery, wherein the mixture includes a cyclic carbonate (e.g. ethylene carbonate or propylene carbonate) having high ion conductivity and high dielectric constant and a low-viscosity linear carbonate-based compound (e.g. ethyl methyl carbonate, dimethyl carbonate or diethyl carbonate). In this case, when mixing the cyclic carbonate with the linear carbonate at a volume ratio of about 1: 1-1:9, it is possible to realize excellent electrolyte quality.

The lithium salt is not particularly limited, as long as it is a compound capable of providing lithium ions used in a lithium-ion secondary battery. Particular examples of the lithium salt include, but are not limited to: $LiPF_6$, $LiClO_4$, $LiAsF_6$, $LiBF_4$, $LiSbF_6$, $LiAlO_4$, $LiAlCl4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, $LiB(C_2O_4)_2$, or the like. Such lithium salts may be used alone or in combination. For example, the lithium salt may be present in the electrolyte at a concentration of 0.1-2 mol/L. When the concentration of the lithium salt falls within the above-defined range, the electrolyte has suitable conductivity and viscosity and shows excellent electrolyte quality, and thus lithium ions can be transported effectively.

Electrolyte additives may be used optionally in order to improve the life characteristics of a battery, to inhibit degradation of the capacity of a battery and to improve the discharge capacity of a battery. Particular examples of the additives include, but are not limited to: haloalkylene carbonate-based compounds, such as fluoroethylene carbonate (FEC) and difluoroethylene carbonate (DFEC); pyridine; triethyl phosphite; triethanolamine; cyclic ethers; ethylene diamine; n-glyme; triamide hexaphosphate; nitrobenzene derivatives; sulfur; quinonimine dyes; N-substituted oxazolidinone; N,N-substituted imidazolidine; ethylene glycol diallyl ether; ammonium salts; pyrrole; 2-methoxyethanol; aluminum trichloride, or the like. Such additives may be used alone or in combination. The additives may be used in an amount of 0.1-15 wt% based on the total weight of the electrolyte.

[Method for Manufacturing Lithium-Ion Secondary Battery]

The lithium-ion secondary battery according to an embodiment of the present disclosure may be obtained by interposing the separator and electrolyte between the positive electrode and the negative electrode obtained as described above. Particularly, the lithium-ion secondary battery may be obtained by disposing the separator between the positive electrode and the negative electrode to form an electrode assembly, introducing the electrode assembly to a battery casing, such as a cylindrical battery casing or prismatic battery casing, and injecting the electrolyte. In a variant, after stacking the electrode assembly, the electrolyte is injected thereto, and the resultant structure is introduced into a battery casing, followed by sealing.

The battery casing may be any one used conventionally in the art. For example, the shape of the battery casing may include a cylindrical shape using a can, a prismatic shape, a pouch-like shape or a coin-like shape.

The lithium-ion secondary battery according to an embodiment of the present disclosure may be used not only as a power source for a compact device but also as a unit cell of a medium- to large-size battery module including a plurality of battery cells. Preferred examples of such medium- to large-size devices include electric vehicles, hybrid electric vehicles, plug-in hybrid electric vehicles, power storage systems, or the like, but are not limited thereto.

MODE FOR DISCLOSURE

«Examples»

Hereinafter, the present disclosure will be explained in more detail with reference to examples and comparative examples. However, the scope of the present disclosure is not limited thereto. The mechanism described hereinafter is for illustrative purposes only, and the scope of the present disclosure is not limited thereto.

[Example 1]

(Addition of Magnesium Fluoride)

First, 0.2 parts by weight of magnesium fluoride ($MgF_2$, available from STELLA CHEMIFA CORP.) was added to 100 parts by weight of $LiNi_{0.90}Co_{0.07}Mn_{0.03}O_2$ (also referred to as 'lithium transition metal oxide', hereinafter) powder, and the resultant mixture was dispersed in isopropyl alcohol. The resultant dispersion was agitated at room temperature for 5 minutes, filtered and dried at 80°C to obtain $MgF_2$-containing powder.

(Addition of Iodine)

To 100 parts by weight of the resultant $MgF_2$-containing powder, simple substance iodine ($I_2$, available from Fuji Film Wakou Pharmaceuticals) was added, the resultant mixture was sealed in a plastic bottle, and the plastic bottle was shaken up and down in one's hand for about 1 minute to mix the ingredients, thereby providing a mixture before firing.

(Firing)

The resultant mixture was warmed to 350°C under ambient atmosphere, allowed to stand at 350°C for 5 hours to perform firing, and then was cooled to room temperature to obtain a positive electrode active material.

(Preparation of Positive Electrode Active Material Slurry)

Then, 1.5 parts by weight of carbon black as a conductive material and 2.0 parts by weight of polyvinylidene fluoride (PVDF) as a binder were added to and mixed with 96.5 parts by weight of the positive electrode active material together with N-methyl-2-pyrrolidone (NMP) as a solvent to obtain a positive electrode active material slurry.

(Manufacture of Positive Electrode Sheet)

After that, the resultant positive electrode active material slurry was applied to aluminum foil having a thickness of 20 μm to a thickness of about 70 μm and dried at 130°C to obtain a positive electrode sheet.

(Preparation of Electrolyte)

Ethylene carbonate, dimethyl carbonate and diethyl carbonate were mixed at a volume ratio of 1:2:1, and 2.0 wt% of vinylene carbonate (VC) was added thereto, while $LiPF_6$ was dissolved therein at a concentration of 1 mol/L, thereby preparing an electrolyte.

(Manufacture of Coin-Cell Battery)

The positive electrode sheet obtained as described above was punched into a circular shape having a diameter of 13 mm to prepare a positive electrode. Lithium metal having a thickness of 0.3 mm was used as a negative electrode, and the electrolyte prepared as described above was used to obtain a CR2016 type coin-cell battery.

(Manufacture of Mono-Cell Battery)

Separately from the coin-cell, the positive electrode sheet obtained as described about was punched into an angular shape and used as a positive electrode, graphite with the corresponding size was used as a negative electrode, and the electrolyte prepared as described above was used to obtain a mono-cell battery.

[Example 2]

A coin-cell battery and a mono-cell battery were obtained in the same manner as Example 1, except that the step of adding iodine was not carried out.

[Comparative Example 1]

A coin-cell battery and a mono-cell battery were obtained in the same manner as Example 1, except that the step of adding magnesium fluoride, the step of adding iodine and the firing step were not carried out. In other words, $LiNi_{0.90}Co_{0.07}Mn_{0.03}O_2$ itself was used as a positive electrode active material, while not adding magnesium fluoride and iodine.

[Comparative Example 2]

A coin-cell battery and a mono-cell battery were obtained in the same manner as Example 1, except that the step of adding iodine and the firing step were not carried out. In other words, only magnesium fluoride was added, while not adding iodine, and the firing step was not carried out.

[Comparative Example 3]

A coin-cell battery and a mono-cell battery were obtained in the same manner as Example 1, except that the step of adding magnesium fluoride was not carried out. In other words, the firing step was carried out, while only iodine was added with no addition of magnesium fluoride.

The conditions used in each of Examples and Comparative Examples are shown in the following Table 1. In the column of 'positive electrode active material slurry', the content of each ingredient is described in the unit of parts by weight.

[Table 1]

| | | Examples | | Comparative Examples | | |
|---|---|---|---|---|---|---|
| | | 1 | 2 | 1 | 2 | 3 |
| Positive electrode active material | Magnesium fluoride | Added | Added | - | Added | - |
| | Iodine | Added | - | - | - | Added |
| Firing temperature | | 350°C | 350°C | No firing | No firing | 350°C |
| Firing time | | 5 hours | 5 hours | | | 5 hours |
| Positive electrode active material slurry | Positive electrode active material | 96.5 | 96.5 | 96.5 | 96.5 | 96.5 |
| | Conductive material | 1.5 | 1.5 | 1.5 | 1.5 | 1.5 |
| | Binder | 2 | 2 | 2 | 2 | 2 |

[Test Example 1: Elemental Analysis of Positive Electrode Active Material Based on X-ray Fluorescence Spectrometry]

The positive electrode active material obtained from each of Examples and Comparative Examples was subjected to elemental analysis based on X-ray fluorescence spectrometry (XRF). The XRF instrument is a scanning type X-ray fluorescence spectrometer (ZSX Primus II (available from Rigaku)). The sample to be analyzed by XRF is a solid-state positive electrode active material before preparing a positive electrode active material slurry. Each value obtained from Comparative Example 1, not subjected to coating treatment, is taken as a baseline, and each value obtained by subtracting the baseline from the measurement of each of Examples 1 and 2 is defined as the magnesium content, fluorine content and iodine content of each sample. Meanwhile, since the content is relatively smaller as compared to the detection limit of the X-ray fluorescence spectrometer, the value of each content shown in the following Table 2 is a reference value.

[Table 2]

| | Magnesium content | Fluorine content | Iodine content |
|---|---|---|---|
| Example 1 | 0.115 wt% | 0.166 wt% | 0.078 wt% |
| Example 2 | 0.088 wt% | 0.132 wt% | - |

[Test Example 2: X-ray Photoelectron Spectroscopy (XPS) Analysis of Positive Electrode Active Material]

Each of the positive electrode active materials obtained according to Examples and Comparative Examples was analyzed by X-ray photoelectron spectroscopy (XPS). XPS was carried out by using Al K-alpha beams under the conditions set to a voltage of 1486.68 eV and a beam size of 650 $\mu$m. The sample to be analyzed is a solid-state positive electrode active material obtained after firing and before preparing a positive electrode active material slurry. Charge correction was carried out with the $-(CH_2)_n-$ derived C1s peak top energy taken as 284.6 eV.

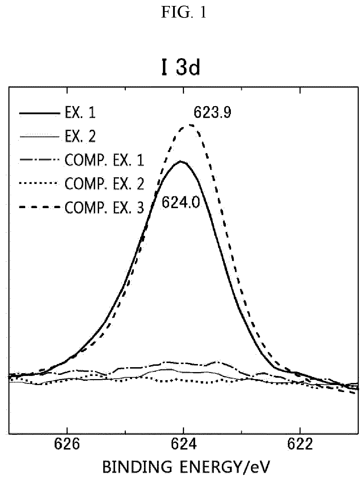

FIGS. 1 to 4 illustrate a part of the XPS spectrum of each of Examples 1 and 2 and Comparative Examples 1-3. In the case of the positive electrode active material in which iodine is added according to each of Example 1 and Comparative Example 3, the iodine $3d_{5/2}$ electron-derived peak having a peak top at around 624 eV is observed in a range of 622-626 eV, while no peak is observed in the case of the positive electrode active material in which no iodine is added according to ach of Example 2 and Comparative Examples 1 and 2. The peak location is near the peak location of sodium iodate ($NaIO_3$) or lithium iodate ($LiIO_3$) containing iodine having an oxidation number of +5, sodium periodate

($NaIO_4$) or lithium periodate ($LiIO_4$) containing iodine having an oxidation number of +7, or the like. Therefore, it is thought that the positive electrode active material obtained by adding iodine and carrying out firing at least partially includes iodine having a positive oxidation number. Particularly, it is thought that iodine in the positive electrode active material is present at least partially in the form of iodate ion and/or periodate ion. Meanwhile, in the case of Example 1 and Comparative Example 3, no peak derived from iodine having an oxidation number of 0 or -1 is observed in a range of 618-620 eV.

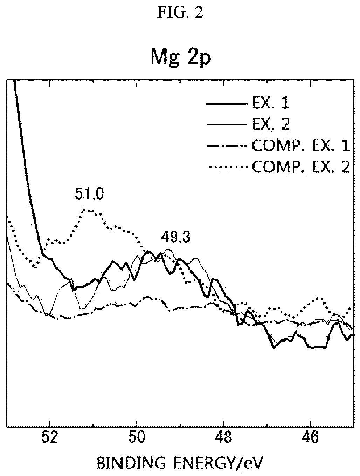

As shown in FIG. 2, in the case of the positive electrode active material in which magnesium fluoride is added and firing is carried out according to each of Examples 1 and 2, a magnesium 2p electron-derived peak having a peak top at around 49.3 eV is observed in a range of 48-50 eV. On the contrary, in the case of the positive electrode active material in which magnesium fluoride is added and firing is not carried out according to Comparative Example 2, a magnesium 2p electron-derived peak having a peak top at around 51.0 eV is observed. In addition, in the case of the positive electrode active material in which no magnesium fluoride is added according to Comparative Example 1, no magnesium 2p electron-derived peak is observed. The peak location observed at around 51.0 eV in Comparative Example 2 corresponds to the peak location of magnesium fluoride $MgF_2$ of the starting material. On the contrary, the peak location observed at around 49.3 eV in Examples 1 and 2 is near the peak location of magnesium hydroxide $Mg(OH)_2$, or the like. Therefore, it is thought that the positive electrode active material obtained by adding magnesium fluoride and carrying out firing includes a magnesium compound (e.g. magnesium hydroxide produced through the reaction of OH groups on the surfaces of lithium transition metal oxide particles with magnesium, or the like), which is formed through the decomposition of the starting material and is different from magnesium fluoride.

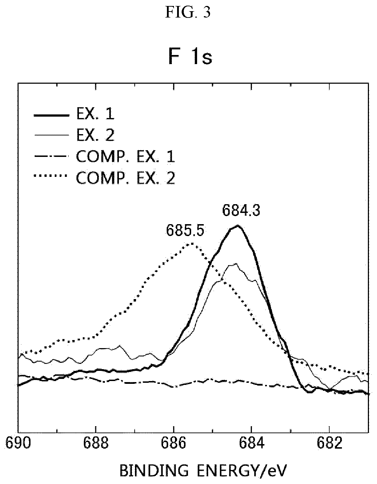

As shown in FIG. 3, in the case of the positive electrode active material in which magnesium fluoride is added and firing is carried out according to each of Examples 1 and 2, a fluorine 1s electron-derived peak having a peak top at around 684.3 eV is observed in a range of 683-685 eV. On the contrary, in the case of the positive electrode active material in which magnesium fluoride is added and firing is not carried out according to Comparative Example 2, a fluorine 1s electron-derived peak having a peak top at around 685.5 eV is observed. In addition, in the case of the positive electrode active material in which no magnesium fluoride is added according to Comparative Example 1, no fluorine 1s electron-derived peak is observed. The peak location observed at around 685.5 eV in Comparative Example 2 corresponds to the peak location of magnesium fluoride $MgF_2$ of the starting material. On the contrary, the peak location observed at around 684.3 eV in Examples 1 and 2 is near the peak location of another compound, such as sodium fluoride NaF, or the like. Therefore, it is thought that magnesium fluoride of the starting material is decomposed in the positive electrode active material obtained by adding magnesium fluoride and carrying out firing, as can be seen from the XPS spectrum of fluorine.

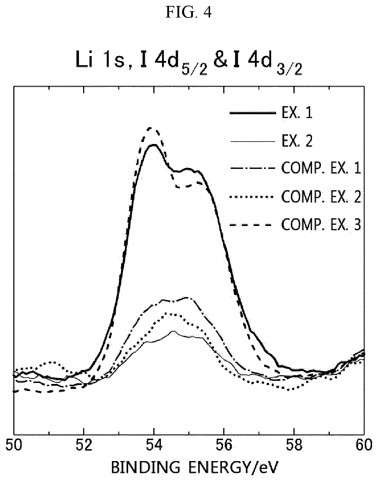

As shown in FIG. 4, in the case of the positive electrode active material in which iodine is added according to each of Example 1 and Comparative Example 3, an iodine $4d_{5/2}$ electron-derived peak and iodine $4d_{3/2}$ electron-derived peak having two peak tops at around 54 eV and 55.3 eV are observed. On the contrary, in the case of the positive electrode active material in which iodine is not added according to each of Example 2 and Comparative Examples 1 and 2, such peaks are not observed but a lithium 1s electron-derived peak having a peak top at around 54.5 eV is observed in a range of 53-56 eV.

[Test Example 3: Initial Discharge Capacity]

The coin-cell battery obtained according to each of Examples and Comparative Examples was subjected to charge/discharge cycles repeatedly in a thermostat maintained at 25°C or 45°C under the conditions of a charge cutoff voltage of 4.25 V, discharge cutoff voltage of 3 V, charge current rate of 0.3 C and a discharge current rate of 0.3 C. As shown in the following Formula, the value of the discharge capacity at the first charge/discharge cycle, divided by the weight of the positive electrode active material powder is defined as 'initial discharge capacity'. From the determined discharge capacity, the initial discharge capacity at 25°C was were calculated.

[Mathematical Formula 1]

$$\text{Initial discharge capacity (mAh/g)} = \text{Discharge capacity (mAh) at } 1^{st}$$

$$\text{charge/discharge cycle / weight (g) of positive electrode active material}$$

The initial discharge capacity of each of Examples and Comparative Examples is shown in the following Table 3. Each value of initial discharge capacity shown in Table 3 is a normalized value calculated by dividing the measured value of each of Examples and Comparative Examples by the initial discharge capacity of Comparative Example 1 for comparison.

[Table 3]

|  | Ex. 1 | Ex. 2 | Comp. Ex. 1 | Comp. Ex. 2 | Comp. Ex. 3 |
|---|---|---|---|---|---|
| Initial discharge capacity (normalized with value of Comp. Ex. 1) | 1.00 | 0.99 | 1 | 0.99 | 1.00 |

In general, the initial discharge capacity of a coated positive electrode active material is reduced as compared to a non-coated positive electrode active material. However, as shown in Table 3, the positive electrode active material obtained by adding magnesium fluoride or iodine and carrying out firing according to each of Examples 1 and 2 and Comparative Example 3 shows an initial discharge capacity equivalent to the initial discharge capacity of Comparative Example 1 in which no coating ingredient is added. Therefore, it can be seen that when magnesium fluoride or iodine is added to a positive electrode active material and firing is carried out under the above-described condition, adverse effects upon the initial discharge capacity are inhibited.

[Test Example 4: Change in Conductivity and Volume Resistivity]

The positive electrode active material powder obtained from each of Examples 1 and 2 and Comparative Examples 1 and 3 was determined in terms of conductivity (electrical conductivity) and volume resistivity under different extents of loads. Particularly, the conductivity and volume resistivity were calculated when 5 g of powder was pressurized by using a 4-terminal probe having an electrode radius of 0.7 mm. The sample radius was taken as 10 mm.

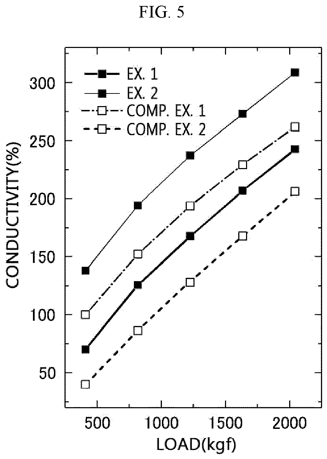

FIG. 5 is a graph illustrating the conductivity of the coin cell battery obtained from each of Examples 1 and 2 and Comparative Examples 1 and 3 as a function of load. It is to be noted that the value of conductivity plotted in FIG. 5 is a relative value calculated by dividing (normalizing) the measured value by the value of conductivity under a load of 4 kN according Comparative Example 1.

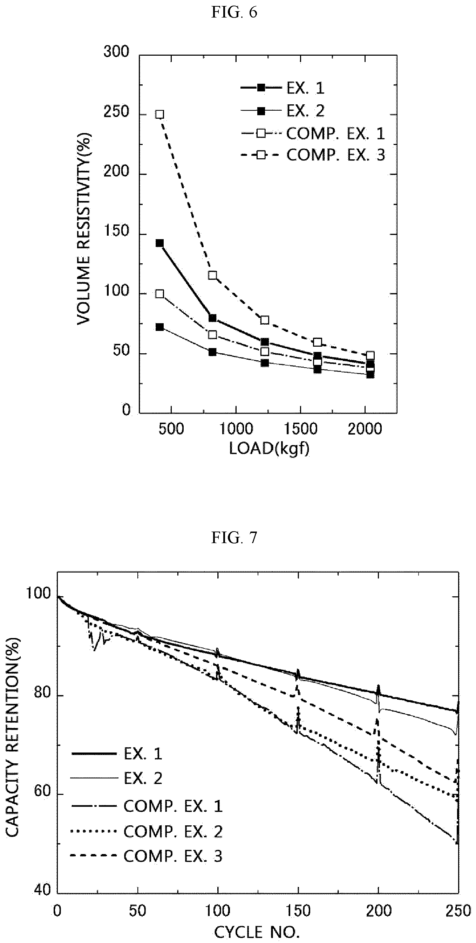

FIG. 6 is a graph illustrating the volume resistivity of the coin cell battery obtained from each of Examples 1 and 2 and Comparative Examples 1 and 3 as a function of load. It is to be noted that the value of volume resistivity plotted in FIG. 6 is a relative value calculated by dividing (normalizing) the measured value by the value of volume resistivity under a load of 4 kN according Comparative Example 1.

As shown in FIGS. 5 and 6, after comparing Example 2 in which magnesium fluoride is added and firing is carried out with Comparative Example 1 in which no magnesium fluoride is added, it can be seen that the coin cell battery according to Example 2 shows higher electrical conductivity as compared to Comparative Example 1 regardless of the extent of load. In addition, after comparing Example 1 in which magnesium fluoride and iodine are added and firing is carried out with Comparative Example 3 in which only iodine is added and firing is carried out, it can be seen that the coin cell battery according to Example 1 shows higher electrical conductivity as compared to Comparative Example 3. Therefore, it is shown that addition of magnesium fluoride causes an increase in overall electrical conductivity of the cell.

[Test Example 5-1: Capacity Retention]

The mono-cell battery obtained according to each of Examples and Comparative Examples was aged at 25°C at a charge current rate of 0.1 C and a discharge current rate of 0.1 C. Next, the mono-cell battery was subjected to charge/discharge cycles 300 times in a thermostat maintained at 45°C under the conditions of a charge cutoff voltage of 4.2 V, discharge cutoff voltage of 2.5 V, charge current rate of 0.3 C and a discharge current rate of 0.3 C. The capacity retention after repeating n times of charge/discharge cycles as defined according to the following Mathematical Formula 2 was calculated from the discharge capacity at each cycle of charge/discharge cycles:

[Mathematical Formula 2]

Capacity retention (%) = {(Discharge capacity at $n^{th}$ charge/discharge cycle) /

(Discharge capacity at $1^{st}$ charge/discharge cycle)} x 100%

FIG. 7 illustrates a change in battery capacity during the $1^{st}$ to $250^{th}$ charge/discharge cycles in the mono-cell battery according to each of Examples and Comparative Examples by plotting the above-defined capacity retention value as a function of charge/discharge cycle number. For each of Examples and Comparative Examples, the discharge capacity at the 1st cycle was taken as 100%. In terms of degradation of battery capacity, Comparative Examples 1-3 are relatively significantly degraded, while Examples 1 and 2 are relatively insignificantly degraded. In the case of Comparative Examples 1, the capacity retention is changed significantly with a high amplitude as a function of cycle number, particularly at the initial cycle. Therefore, it can be seen that Examples 1 and 2 in which magnesium fluoride is added and firing is carried out shows improvement of capacity retention as charge/discharge cycles are repeated, as compared to Comparative Examples in which no magnesium fluoride is added. In addition, Example 1 in which magnesium fluoride and iodine are added and firing is carried out maintains the discharge capacity for a longer time as charge/discharge cycles are repeated, as compared to Example 2 in which iodine is not added.

[Test Example 5-2: Linear Resistance Increase]

In each cycle of the repeated charge/discharge cycles in Test Example 5-1, the value of direct current resistance of the mono-cell battery was determined. Particularly, the direct current resistance value was calculated from a gradient of the linear plotted by linear approximation of a discharge curve obtained by acquiring a voltage value at a predetermined interval for 60 seconds right after the initiation of discharging, after the fully charged state in which charging was completed. For each of Examples 1 and 2 and Comparative Examples 1-3, the linear resistance increase at the $n^{th}$ charge/discharge cycle as defined according to the following Mathematical Formula 3 was calculated. To facilitate comparison of a change in linear resistance of each of Examples and Comparative Examples, normalization was carried out by taking the linear resistance increase of Comparative Example 1 at the $299^{th}$ cycle as reference.

[Mathematical Formula 3]

$$\text{Linear resistance increase (\%)} = [\{(\text{Linear resistance at } n^{th} \text{ charge/discharge cycle})$$

$$/ (\text{Linear resistance at } 1^{st} \text{ charge/discharge cycle})\} / \{(\text{Linear resistance of Comparative}$$

$$\text{Example 1 at } 299^{th} \text{ charge/discharge cycle}) / (\text{Linear resistance of Comparative Example 1}$$

$$\text{at } 1^{st} \text{ charge/discharge cycle})\}] \times 100\%$$

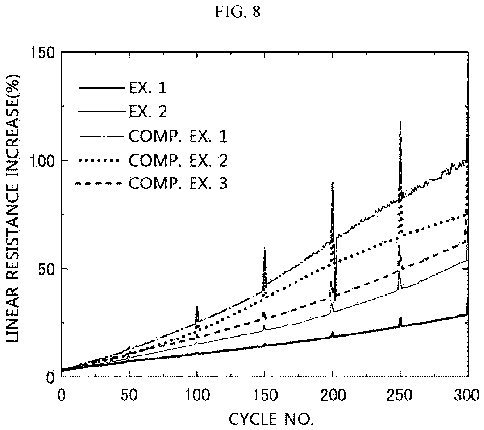

FIG. 8 illustrates a change in linear resistance during the $1^{st}$ to $300^{th}$ charge/discharge cycles in the battery according to each of Examples 1 and 2 and Comparative Examples 1-3 by plotting the above-defined value of linear resistance increase as a function of charge/discharge cycle number. All Examples and Comparative Examples show an increase in linear resistance value as charge/discharge cycles are repeated. In terms of linear resistance value, Example 1 shows the smallest increase in linear resistance, and Example 2 shows the second smallest increase in linear resistance. Meanwhile, Comparative Example 1 shows the largest increase in linear resistance. Therefore, it can be seen that Example 1 and 2 in which magnesium fluoride is added and firing is carried out inhibits an increase in linear resistance value while charge/discharge cycles are repeated, as compared to Comparative Examples in which no magnesium fluoride is added. In addition, Example 1 in which magnesium fluoride and iodine are added and firing is carried out further inhibits an increase in linear resistance value while charge/discharge cycles are repeated, as compared to Example 2 in which iodine is not added.

[Test Example 5-3: Change in Cell Volume]

The mono-cell battery according to each of Examples and Comparative Examples was determined in terms of cell volume. For each of Examples 1 and 2 and Comparative Examples 1-3, a change in cell volume at the $n^{th}$ charge/discharge cycle as defined by the following Mathematical Formula 4 was calculated from the cell volume of each cycle. To facilitate comparison of a change in cell volume of each of Examples and Comparative Examples, normalization was carried out by taking the change in cell volume of Comparative Example 1 at the $299^{th}$ cycle as reference.

[Mathematical Formula 4]

Change in cell volume (%) = [{(Cell volume at $n^{th}$ charge/discharge cycle) / (Cell volume at $1^{st}$ charge/discharge cycle)} / {(Cell volume of Comparative Example 1 at $299^{th}$ charge/discharge cycle) / (Cell volume of Comparative Example 1 at $1^{st}$ charge/discharge cycle)}] x 100%

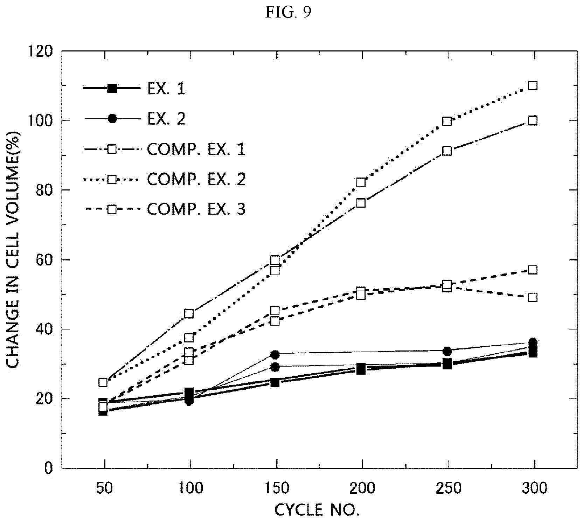

FIG. 9 illustrates a change in cell volume during the $50^{th}$ to $300^{th}$ charge/discharge cycles in the battery according to each of Examples 1 and 2 and Comparative Examples 1-3 by plotting the above-defined value of change in cell volume as a function of charge/discharge cycle number. For Examples 1 and 2 and Comparative Example 3, the results are shown after testing twice (it is shown that the results obtained after testing twice in each case are substantially the same). All Examples and Comparative Examples show an increase in cell volume as charge/discharge cycles are repeated. In terms of a change in cell volume, Example 1 shows the smallest change in cell volume, and Example 2 shows the second smallest change in cell volume. Meanwhile, Comparative Example 1-3 show a significantly larger change in cell volume as compared to Examples 1 and 2. Therefore, it can be seen that Examples 1 and 2 in which magnesium fluoride is added and firing is carried out inhibit an increase in cell volume while charge/discharge cycles are repeated, as compared to Comparative Examples in which no magnesium fluoride is added. An increase in cell volume caused by repetition of charge/discharge frequently results from gas generation. Therefore, it is thought that Examples 1 and 2 in which magnesium fluoride is added and firing is carried out inhibits gas generation.

## Claims

1. A positive electrode active material which comprises a core containing a lithium transition metal oxide, and a coating portion at least partially covering the surface of the core, wherein the coating portion comprises magnesium and fluorine, and the spectrum of Mg2p has a peak at 48-50 eV, as determined by X-ray photoelectron spectroscopy.

2. The positive electrode active material according to claim 1, wherein the spectrum of F1s observed by X-ray photoelectron spectroscopy of the positive electrode active material has a peak at 683-685 eV.

3. The positive electrode active material according to claim 1 or 2, wherein the content of magnesium is 0.02-0.5 parts by weight based on 100 parts by weight of lithium transition metal oxide.

4. The positive electrode active material according to any one of claims 1 to 3, wherein the content of fluorine is 0.02-0.5 parts by weight based on 100 parts by weight of lithium transition metal oxide.

5. The positive electrode active material according to any one of claims 1 to 4, wherein the coating portion comprises iodine.

6. The positive electrode active material according to claim 5, wherein the coating portion comprises iodine having an oxidation number of +5 to +7.

7. The positive electrode active material according to claim 5 or 6, wherein the content of iodine is 0.001-5 parts by weight based on 100 parts by weight of lithium transition metal oxide.

8. The positive electrode active material according to any one of claims 1 to 7, wherein the lithium transition metal oxide is represented by the chemical formula of $Li_aNi_xM_yO_2$ (wherein $0 < a \leq 1.05$, $x + y = 1$, $0.4 \leq x \leq 1$, and M is at least one metal element other than Ni).

9. A positive electrode active material slurry for a lithium-ion secondary battery, comprising the positive electrode active material as defined in any one of claims 1 to 8.

10. A positive electrode for a lithium-ion secondary battery which has a positive electrode active material layer, comprising the positive electrode active material as defined in any one of claims 1 to 8 and formed on a current collector.

11. A lithium-ion secondary battery comprising the positive electrode as defined in claim 10.

12. A method for preparing a positive electrode active material, comprising the steps of:

preparing a mixture containing a lithium transition metal oxide, magnesium and fluorine; and
firing the mixture,
wherein the spectrum of Mg2p of the resultant positive electrode active material has a peak at 48-50 eV, as
determined by X-ray photoelectron spectroscopy.

13. The method for preparing a positive electrode active material according to claim 12, which comprises a step of firing the mixture at a firing temperature of 150-400°C.

14. The method for preparing a positive electrode active material according to claim 12 or 13, which comprises a step of adding an ingredient containing magnesium and fluorine as an ingredient of the mixture, wherein the ingredient containing magnesium and fluorine is magnesium fluoride.

15. The method for preparing a positive electrode active material according to any one of claims 12 to 14, which comprises a step of adding an iodine-containing iodine ingredient as an ingredient of the mixture, wherein the mixture comprises a lithium transition metal oxide, fluorine, magnesium and iodine.

FIG. 1

**I 3d**

FIG. 2

Mg 2p

FIG. 3

# F 1s

BINDING ENERGY/eV

FIG. 4

Li 1s, I 4d$_{5/2}$ & I 4d$_{3/2}$

FIG. 5

FIG. 6

FIG. 7

FIG. 8

FIG. 9

<div align="center">

**INTERNATIONAL SEARCH REPORT**

</div>

| | International application No. |
|---|---|
| | **PCT/KR2022/021441** |

**A. CLASSIFICATION OF SUBJECT MATTER**

**H01M 4/36**(2006.01)i; **H01M 4/525**(2010.01)i; **H01M 4/505**(2010.01)i; **C01G 53/00**(2006.01)i; **H01M 4/131**(2010.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/36(2006.01); H01M 10/052(2010.01); H01M 4/485(2010.01); H01M 4/525(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(cathode material), 코어(core), 피복(coating), 마그네슘(Mg), 불소(F), Mg2p

**C. DOCUMENTS CONSIDERED TO BE RELEVANT**

| Category* | Citation of document, with indication, where appropriate, of the relevant passages | Relevant to claim No. |
|---|---|---|
| X | YANG, K. et al. Understanding the Mechanism of MgF2 Modification on the Electrochemical Performance of Lithium-Rich Layered Oxides. International Journal of ELECTROCHEMICAL SCIENCE. 2019, vol. 14, pp. 3139-3152.<br>See abstract; pages 3141, 3144 and 3151; and figure 3. | 1-3,12-14 |
| A | WANG, Y. et al. Effect of MgF2 coating on the electrochemical performance of LiMn2O4 cathode materials. J Solid State Electrochem. 2012, vol. 16, pp. 2913-2920.<br>See abstract. | 1-3,12-14 |
| A | KR 10-2013-0098372 A (ENVIA SYSTEMS, INC.) 04 September 2013 (2013-09-04)<br>See entire document. | 1-3,12-14 |
| A | KR 10-2020-0124515 A (SAMSUNG SDI CO., LTD.) 03 November 2020 (2020-11-03)<br>See entire document. | 1-3,12-14 |
| A | KR 10-2015-0090215 A (UMICORE et al.) 05 August 2015 (2015-08-05)<br>See entire document. | 1-3,12-14 |

☐ Further documents are listed in the continuation of Box C.    ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 April 2023** | **14 April 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2022/021441** |

| Box No. II | Observations where certain claims were found unsearchable (Continuation of item 2 of first sheet) |
| --- | --- |

This international search report has not been established in respect of certain claims under Article 17(2)(a) for the following reasons:

1. ☐ Claims Nos.:
   because they relate to subject matter not required to be searched by this Authority, namely:

2. ☑ Claims Nos.: **6,11**
   because they relate to parts of the international application that do not comply with the prescribed requirements to such an extent that no meaningful international search can be carried out, specifically:

   Claims 6 and 11 refer to multiple dependent claims not meeting the requirement of PCT Rule 6.4(a).

3. ☑ Claims Nos.: **4-5,7-10,15**
   because they are dependent claims and are not drafted in accordance with the second and third sentences of Rule 6.4(a).

Form PCT/ISA/210 (continuation of first sheet) (July 2022)

**INTERNATIONAL SEARCH REPORT**
**Information on patent family members**

International application No.

**PCT/KR2022/021441**

| Patent document cited in search report | | | Publication date (day/month/year) | Patent family member(s) | | | Publication date (day/month/year) |
|---|---|---|---|---|---|---|---|
| KR | 10-2013-0098372 | A | 04 September 2013 | CN | 103140962 | A | 05 June 2013 |
| | | | | EP | 2619828 | A2 | 31 July 2013 |
| | | | | EP | 2619828 | B1 | 17 January 2018 |
| | | | | EP | 3285315 | A1 | 21 February 2018 |
| | | | | EP | 3285315 | B1 | 05 June 2019 |
| | | | | JP | 2013-543219 | A | 28 November 2013 |
| | | | | TW | 201225391 | A | 16 June 2012 |
| | | | | US | 2012-0070725 | A1 | 22 March 2012 |
| | | | | US | 8663849 | B2 | 04 March 2014 |
| | | | | WO | 2012-039893 | A2 | 29 March 2012 |
| | | | | WO | 2012-039893 | A3 | 14 June 2012 |
| KR | 10-2020-0124515 | A | 03 November 2020 | KR | 10-2385748 | B1 | 11 April 2022 |
| KR | 10-2015-0090215 | A | 05 August 2015 | CN | 104919631 | A | 16 September 2015 |
| | | | | CN | 104919631 | B | 02 August 2019 |
| | | | | EP | 2932546 | A1 | 21 October 2015 |
| | | | | JP | 2016-506596 | A | 03 March 2016 |
| | | | | JP | 6242401 | B2 | 06 December 2017 |
| | | | | KR | 10-1690898 | B1 | 28 December 2016 |
| | | | | TW | 201434752 | A | 16 September 2014 |
| | | | | TW | I513660 | B | 21 December 2015 |
| | | | | US | 2015-0380722 | A1 | 31 December 2015 |
| | | | | US | 9859550 | B2 | 02 January 2018 |
| | | | | WO | 2014-091331 | A1 | 19 June 2014 |

Form PCT/ISA/210 (patent family annex) (July 2022)

**EP 4 329 005 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021212769 A
- JP 2018063835 A